# EUROPÄISCHE PATENTSCHRIFT

(11) **EP 1 123 839 B1**
(45) Veröffentlichungstag und Bekanntmachung des Hinweises auf die Patenterteilung: **09.07.2008**
(21) Anmeldenummer: 01102549.1
(22) Anmeldetag: 06.02.2001
(51) Int. Cl.: B60R 1/12

(54) **Aussenrückblickspiegel**
Rear view mirror
Rétroviseur

(30) Priorität: 10.02.2000 DE 20002386 U
(43) Veröffentlichungstag der Anmeldung: 16.08.2001
(73) Patentinhaber: Visiocorp Patents S.à.r.l., 2346 Luxembourg (LU)
(72) Erfinder: Rommel, Bernd, 70736 Fellbach-Schmiden (DE)
(74) Vertreter: Rausch, Gabriele

(56) Entgegenhaltungen:
- DE-A- 4 423 134
- DE-A- 19 736 482
- US-A- 4 447 808

## Beschreibung

Die Erfindung betrifft einen Außenrückblickspiegel nach dem Oberbegriff des Anspruches 1.

Zum Öffnen von Garagentoren sind Garagentoröffner bekannt, deren Senderteile im Kraftfahrzeug lose mitgeführt werden und denen in der Garage ein Empfänger zugeordnet ist. Die Senderteile haben den Nachteil, dass sie häufig im Fahrzeug verlegt werden, so dass der Fahrer den Sender zum Öffnen bzw. Schließen der Garage häufig nicht schnell genug finden kann.

Beim gattungsgemäßen Außenrückblickspiegel (DE 197 36 482 A) ist das Spiegelgehäuse mit einer Öffnung versehen, in die eine gehäuseartige Blende eingesetzt ist. In ihr ist ein Senderteil des Garagentoröffners befestigt. Die Blende selbst hat einen umlaufenden vorstehenden Rand, mit dem sie auf einem nach innen abgesetzten Rand der Gehäuseöffnung aufgesetzt und mit ihm verklebt oder verschweißt ist.

Der Erfindung liegt die Aufgabe zugrunde, den gattungsgemäßen Außenrückblickspiegel so auszubilden, dass eine einfache Montage des Senderteiles gewährleistet ist.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel ist das Senderteil des Garagentoröffners in der Blende angeordnet und über die Blende fest im Au-ßenrückblickspiegel untergebracht. Im Kraftfahrzeug ist ein Einbauraum für das Senderteil nicht erforderlich. Da die Blende mit dem Senderteil versehen ist, ist eine einfache Montage des Senderteiles gewährleistet. Es lässt sich durch Abnehmen der Blende auch einfach austauschen.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschreiben. Es zeigen
- Fig. 1: in perspektivischer Darstellung einen Spiegelkopf eines erfindungsgemäßen Außenrückblickspiegels mit einer Blende, die an einem Gehäuse des Spiegelkopfes gehalten ist,
- Fig. 2: einen Schnitt längs der Line II-II in Fig. 1,
- Fig. 3: einen Schnitt längs der Linie III-III in Fig. 1,
- Fig. 4: einen Schnitt längs der Linie IV-IV in Fig. 1,
- Fig. 5: die Blende in Ansicht gemäß Pfeil V in Fig. 6,
- Fig. 6: die Blende in Ansicht gemäß Pfeil VI in Fig. 5.

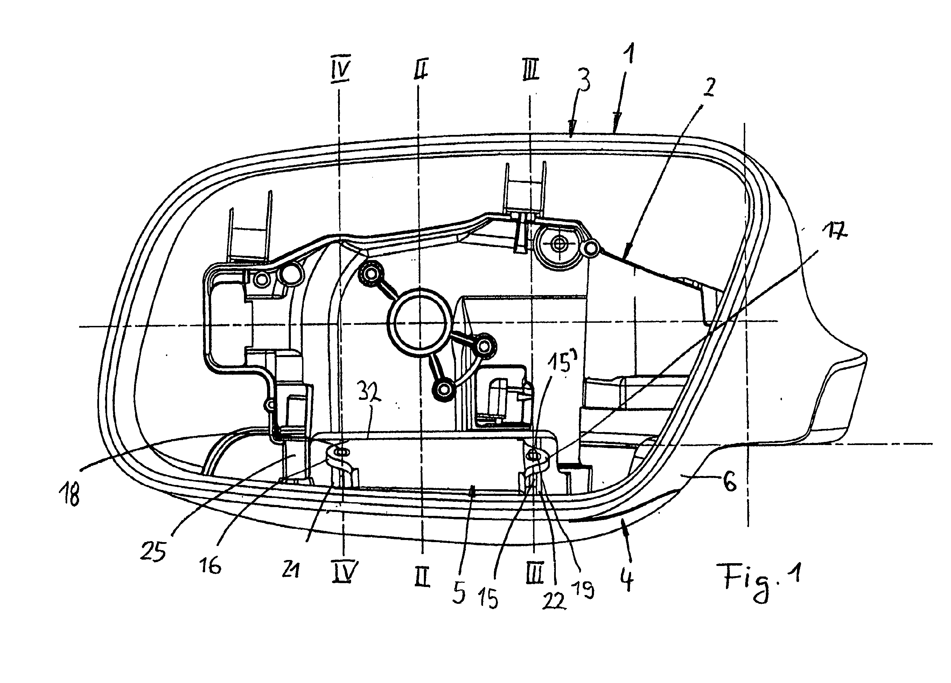

Der in den Fig. 1 bis 6 dargestellte Spiegelkopf 1 eines Außenrückblickspiegels enthält ein Senderteil 5 zum Betätigen eines Garagentoröffners. Der Spiegelkopf 1 hat einen Träger 2 für einen (nicht dargestellten) Spiegelglasträger und ein Gehäuse 3, an dem eine Blende 4 gehalten wird. Erfindungsgemäß wird die Blende auch am Träger gehalten. Der Spiegelkopf 1 ist in bekannter Weise abklappbar mit einem (nicht dargestellten) Spiegelfuß verbunden, mit dem der Außenrückblickspiegel am Kraftfahrzeug befestigt ist. Die konstruktive Ausbildung des Spiegelkopfes 1 ist bekannt und wird darum nicht näher beschrieben. Das Senderteil 5 des (nicht dargestellten) Garagentoröffners ist auf der Innenseite 27 der Blende 4 angeordnet.

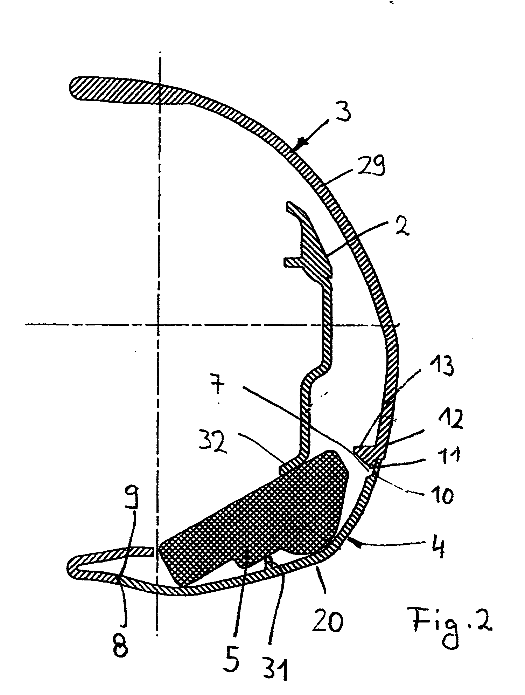

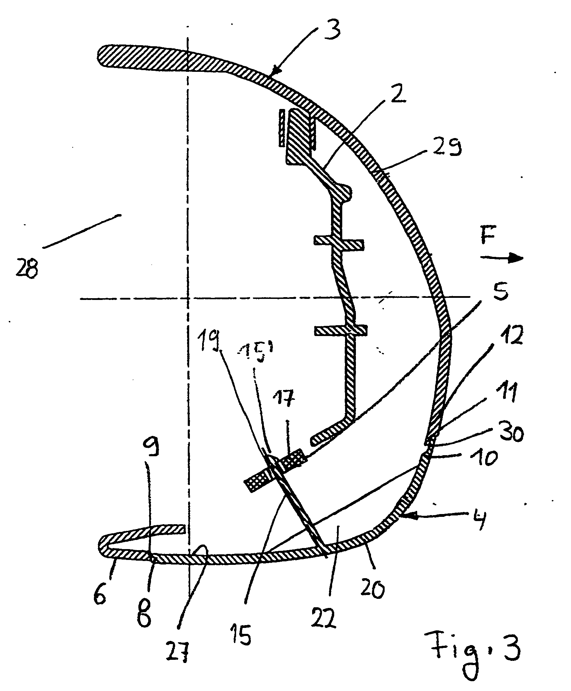

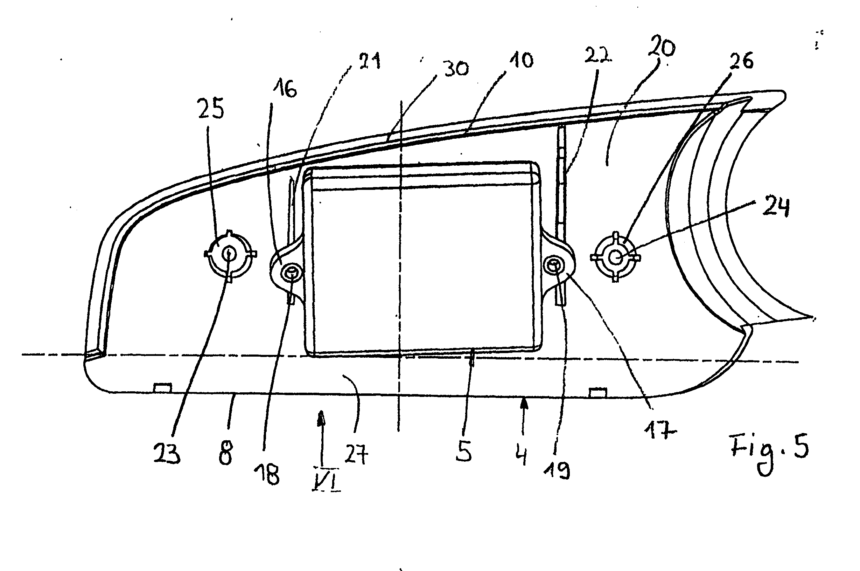

Die Blende 4 ist an einer Unterseite 6 des Gehäuses 3 in einer Gehäuseöffnung 7 gehalten (Fig. 1 bis 4) und hat, wie Fig. 5 zeigt, etwa rechteckigen Umriß. Die Blende 4 erstreckt sich annähernd über die ganze Länge der Unterseite 6 des Gehäuses 3. In ihrer Formgebung ist die Blende 4 so an das Gehäuse 3 angepaßt, daß sie eine stetige Fortsetzung der angrenzenden Bereiche des Gehäuses bildet. Mit ihrem vorderen Längsrand 8 (Fig. 3) liegt die Blende an einem Längsrand 9 der Öffnung 7 stoßend an, der nahe einer das Spiegelglas enthaltenden Öffnung 28 des Gehäuses 3 in dessen Unterseite 6 vorgesehen ist. Der andere Längsrand 10 der Blende 4 liegt in der in Fahrrichtung F weisenden Vorderseite 29 des Gehäuses 3 und ist verjüngt ausgebildet. Dadurch hat dieser Längsrand 10 einen in der Dicke verringerten Randteil 30, der einen in der Dicke verringerten Randteil 11 des Randes 12 der Öffnung 7 übergreift. Wie Fig. 2 zeigt, ist die Vorderseite 29 des Gehäuses 3 etwa in halber Länge des Randes 12 der Öffnung 7 innenseitig mit einer Verstärkung 13 versehen, die im Ausführungsbeispiel dreieckigen Querschnitt hat. Die Verstärkung 13 verjüngt sich nach innen.

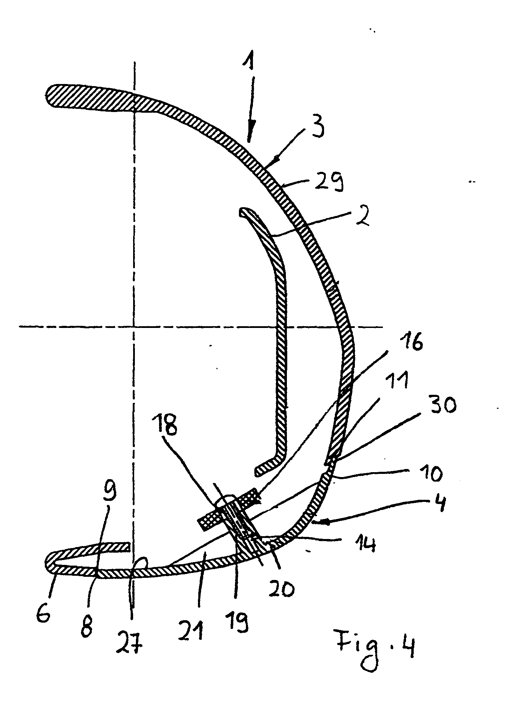

Auf der Innenseite 27 der Blende 4 aufliegend (Fig. 4) wird das als Modul 5 ausgebildete Senderteil mit Halteteilen 14 und 15 gehalten. Das Halteteil 14 ist eine Schraube (Fig. 4), die in einen Befestigungsdom 19 geschraubt wird, der von der Innenseite 27 der Blende 4 absteht und vorzugsweise einstückig mit ihr ausgebildet ist (Fig. 4). Das Halteteil 15 (Fig. 3) ist ein schmaler, von der Innenseite 27 der Blende 4 schräg abstehender und vorzugsweise einstückig mit ihr ausgebildeter Steg, der am freien Ende einen Haken 15' aufweist. Das Gehäuse des Senderteiles 5 hat an zwei einander gegenüberliegenden Seiten 33, 34 vorgesehene abstehende Laschen 16, 17, die jeweils mit einer Öffnung 18, 19 versehen sind. Durch die Öffnung 18 ragt die Schraube 14 und durch die Öffnung 19 der Steg 15, dessen hakenförmiges Ende 15 die Lasche 16 hintergreift (Fig. 1, 3 und 6).

Die Blende 4 erstreckt sich, wie die Fig. 2 bis 4 zeigen, von der Unterseite 6 des Gehäuses 3 bogenförmig gekrümmt in dessen Vorderseite 29. Im Übergangsbereich 20 ist die Blende 4 innenseitig mit zwei Rippen 21, 22 versteift, die mit Abstand voneinander angeordnet sind und sich quer zur Längsrichtung der Blende erstrecken (Fig. 1, 5 und 6). In Seitenansicht (Fig. 3 und 4) haben die Rippen 21, 22 etwa Dreieckform. Sie sind vorteilhaft einstückig mit der Blende 4 ausgebildet. Das Senderteil 5 liegt zwischen den beiden Rippen 21, 22 auf der Innenseite der Blende 4 auf. Die beiden stegförmig ausgebildeten Rippen 21, 22 liegen parallel zueinander.

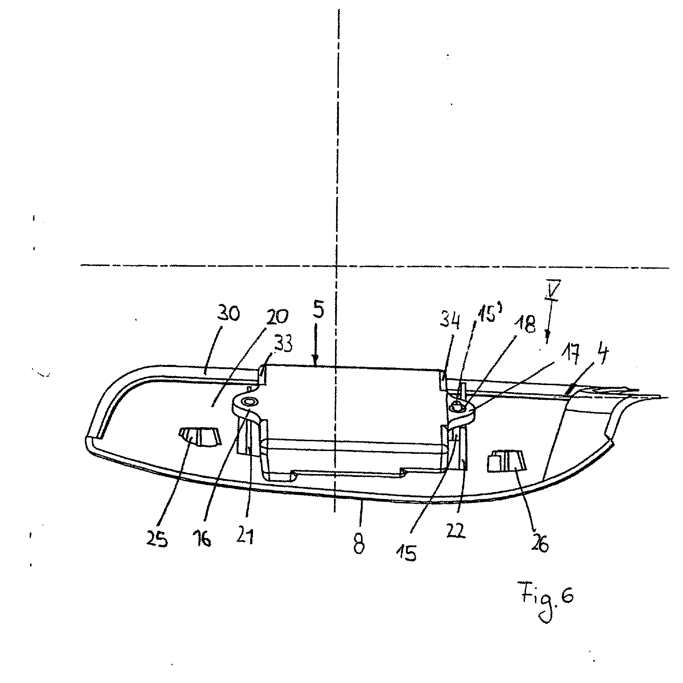

Die Blende 4 wird am Träger 2 befestigt. Sie kann am Träger 2 eingerastet werden, so daß eine einfache und schnelle Montage möglich ist. Es ist aber auch möglich, die Blende 4 am Träger 2 anzuschrauben. Für diesen Fall stehen von der Innenseite 27 der Blende 4 beiderseits der Rippen 21, 22 bzw. des Senderteiles 5 zwei Befestigungsdome 25, 26 ab, die vorzugsweise einstückig mit der Blende 4 ausgebildet sind (Fig. 5 und 6) und in deren zentrale Öffnungen 23, 24 (nicht dargestellte) Schrauben zur lösbaren Befestigung der Blende 4 am Träger 2 geschraubt werden können.

Im Bereich zwischen den Rippen 21, 22 steht von der Innenseite 27 der Blende 4 eine flache Rippe 31 ab (Fig. 2), auf der sich das Senderteil 5 abstützt. Der Träger 2 ist außerdem so ausgebildet, daß er mit einem abgewinkelten Abschnitt 32 (Fig. 1 und 2) auf dem Senderteil 5 aufliegt und es in seiner Einbaulage zusätzlich sichert.

Durch den sicheren Halt der Blende 4 am Spiegelgehäuse 3 ist auch das Senderteil 5 einwandfrei gesichert. Es ist über eine (nicht dargestellte) elektrische Verbindung mit einem Betätigungsteil, wie einem Schalter, einem Knopf oder dergleichen, der im Fahrzeuginneren vorgesehen ist, betätigbar. Kommt der Fahrer mit seinem Fahrzeug in die Nähe des Garagentores, kann er auf einfache Weise mit dem Betätigungsteil das Senderteil 5 aktivieren, das ein Signal an eine Empfangseinheit des Garagentoröffners abgibt. Hierdurch wird das Garagentor ferngesteuert geöffnet bzw. geschlossen. Die Blende 4 besteht aus einem für die vom Senderteil 5 ausgesandten Strahlen durchlässigen Material.

## Patentansprüche

1. Außenrückblickspiegel mit einem Spiegelkopf (1), der mit einem Gehäuse (3) versehen ist, in dem ein Träger (2) für das Gehäuse (3) untergebracht ist, das eine Öffnung (7) aufweist, die mit mindestens einer Blende (4) verschließbar ist, die mit mindestens einem Senderteil (5) eines Garagentoröffners versehen ist,
**dadurch gekennzeichnet, dass** die Blende (4) am Träger (2) gehalten ist.

2. Außenrückblickspiegel nach Anspruch 1,
**dadurch gekennzeichnet, dass** die Blende (4) lösbar mit dem Träger (2) verbunden ist.

3. Außenrückblickspiegel nach Anspruch 2,
**dadurch gekennzeichnet, dass** die Blende (4) rastend mit dem Träger (2) verbunden ist.

4. Außenrückblickspiegel nach Anspruch 2,
**dadurch gekennzeichnet, dass** die Blende (4) am Träger (2) verschraubt ist.

5. Außenrückblickspiegel nach Anspruch 4,
**dadurch gekennzeichnet, dass** die Blende (4) mindestens ein, vorzugsweise zwei in Längsrichtung der Blende (4) mit Abstand voneinander vorgesehene Halteteile (25, 26) für jeweils ein Befestigungsteil aufweist.

6. Außenrückblickspiegel nach einem der Ansprüche 1 bis 5,
**dadurch gekennzeichnet, dass** die Blende (4) mindestens ein, vorzugsweise zwei mit Abstand nebeneinander liegende weitere Halteteile (14, 15) zum Befestigen des Senderteiles (5) des Garagentoröffners aufweist.

7. Außenrückblickspiegel nach Anspruch 6,
**dadurch gekennzeichnet, dass** das eine weitere Halteteil (14) eine Schraube ist, die in einen Aufnahmeteil (19) an der Innenseite (27) der Blende (4) schraubbar ist.

8. Außenrückblickspiegel nach Anspruch 6 oder 7,
**dadurch gekennzeichnet, dass** das andere weitere Halteteil (15) hakenförmig ausgebildet ist und mit einem Hakenende (15) ein Anschlussteil (16) des Garagentoröffnerteils (5) hintergreift.

9. Außenrückblickspiegel nach Anspruch 8,
**dadurch gekennzeichnet, dass** das andere weitere Halteteil (15) von der Innenseite (27) der Blende (4) absteht.

10. Außenrückblickspiegel nach Anspruch 8 oder 9,
**dadurch gekennzeichnet, dass** das andere weitere Halteteil (15) einstückig mit der Blende (4) ausgebildet ist.

11. Außenrückblickspiegel nach einem der Ansprüche 6 bis 10,
**dadurch gekennzeichnet, dass** die weiteren Halteteile (14, 15) mit etwa gleichem Abstand zwischen den benachbarten Halteteilen (25, 26) der Blende (4) vorgesehen sind.

12. Außenrückblickspiegel nach einem der Ansprüche 5 bis 11,
**dadurch gekennzeichnet, dass** die Halteteile (25, 26) von der Innenseite (27) der Blende (4) abstehen.

13. Außenrückblickspiegel nach einem der Ansprüche 5 bis 12,
**dadurch gekennzeichnet, dass** die Halteteile (25, 26) einstückig mit der Blende (4) ausgebildet sind.

14. Außenrückblickspiegel nach einem der Ansprüche 1 bis 13,
**dadurch gekennzeichnet, dass** das Senderteil (5) des Garagentoröffners zwischen sich quer zur Längsrichtung der Blende (4) erstreckenden Versteifungsrippen (21, 22) liegt.

15. Außenrückblickspiegel nach einem der Ansprüche 1 bis 14,
**dadurch gekennzeichnet, dass** sich die Blende (4) von einer Unterseite (6) des Gehäuses (3) aus bis in eine in Fahrtrichtung (F) des Fahrzeuges nach vorn weisende Wand (29) des Gehäuses (3) erstreckt.

16. Außenrückblickspiegel nach Anspruch 14 oder 15,
**dadurch gekennzeichnet, dass** die Versteifungsrippen (21, 22) am Übergangsbereich (20) zwischen den beiden Bereichen der Blende (4) liegen.

17. Außenrückblickspiegel nach einem der Ansprüche 1 bis 16,
**dadurch gekennzeichnet, dass** das Senderteil (5) über seine Seiten (33, 34) ragende, vorteilhaft jeweils Öffnungen (18, 19) für die weiteren Halteteile (14, 15) aufweisende Anschlussteile (16, 17) aufweist.

18. Außenrückblickspiegel nach einem der Ansprüche 1 bis 17,
**dadurch gekennzeichnet, dass** die Blende (4) über die Halteteile (25, 26) am Träger (2) befestigt ist.

19. Außenrückblickspiegel nach einem der Ansprüche 1 bis 18,
**dadurch gekennzeichnet, dass** die Blende (4) mit ihrer Außenseite eine stetige Fortsetzung der angrenzenden Bereiche des Gehäuses (3) bildet.

20. Außenrückblickspiegel nach einem der Ansprüche 1 bis 19,
**dadurch gekennzeichnet, dass** die Blende (4) aus für die vom Senderteil (5) ausgesandten Strahlen durchlässigem Material besteht.

## Claims

1. An exterior rearview mirror comprising a mirror head (1), comprising a housing (3), in which a carrier (2) for the housing (3) is disposed, wherein said housing comprises an opening (7), which can be closed by at least one aperture (4), which is provided with at least one transmitter component (5) of a garage door opener, wherein the aperture (4) is supported at the carrier (2).

2. An exterior rearview mirror according to claim 1, wherein the aperture (4) is connected to the carrier (2), so that it can be disengaged.

3. An exterior rearview mirror according to claim 2, wherein the aperture (4) is connected to the carrier (2) through interlocking.

4. An exterior rearview mirror according to claim 2, wherein the aperture (4) is mounted to the carrier (2) by a threaded connection.

5. An exterior rearview mirror according to claim 4, wherein the aperture (4) comprises at least one, preferably two holder components (25, 26), provided at a distance from one another in longitudinal direction of the aperture (4), wherein each holder component is provided for one respective mounting component.

6. An exterior rearview mirror according to one of the claims 1 through 5, wherein the aperture (4) comprises at least one, preferably two, additional holder components (14, 15), located adjacent to each other at a distance from one another for mounting the transmitter component (5) of the garage door opener.

7. An exterior rearview mirror according to claim 6, wherein the one additional holder component (14) is a screw, which can be screwed into a receiver component (19) at the inside of the aperture (4).

8. An exterior rearview mirror according to claim 6 or 7, wherein the other additional holder component (15) is formed hook shaped and reaches behind a connection component (16) of the garage door opener component (5) with a hook end (15').

9. An exterior rearview mirror according to claim 8, wherein the other additional holder component (15) protrudes from the inside (27) of the aperture (4).

10. An exterior rearview mirror according to claim 8 or 9, wherein the other additional holder component (15) is configured integrally with the aperture (4).

11. An exterior rearview mirror according to one of the claims 6 through 10, wherein the additional holder components (14, 15) are provided with approximately the same distance between the adjacent holder components (25, 26) of the aperture (4).

12. An exterior rearview mirror according to one of the claims 5 through 11, wherein the holder components (25, 26) protrude from the inside (27) of the aperture (4).

13. An exterior rearview mirror according to one of the claims 5 through 12, wherein the holder components (25, 26) are formed integrally with the aperture (4).

14. An exterior rearview mirror according to one of the claims 1 through 13, wherein the transmitter component (5) of the garage door opener is disposed between reinforcement ribs (21, 22) extending transversal to the longitudinal direction of the aperture (4).

15. An exterior rearview mirror according to one of the claims 1 through 14, wherein the aperture (4) extends from a bottom side (6) of the housing (3) into a wall (29) of the housing (3), wherein said wall faces forward in driving direction F of the vehicle.

16. An exterior rearview mirror according to claim 14 or 15, wherein the reinforcement ribs (21, 22) are located in the transition portion (20) between the two portions of the aperture (4).

17. An exterior rearview mirror according to one of the claims 1 through 16, wherein the transmitter component (5) comprises connection components (16, 17) protruding beyond its sides (33, 34), advantageously comprising respective openings (18, 19) for the additional holder components (14, 15).

18. An exterior rearview mirror according to one of the claims 1 through 17, wherein the aperture (4) is mounted to the carrier (2) by holder components (25, 26).

19. An exterior rearview mirror according to one of the claims 1 through 18, wherein the aperture (4) forms a continuous extension of the adjoining portions of the housing (3) with its exterior side.

20. An exterior rearview mirror according to one of the claims 1 through 19, wherein the aperture (4) is comprised of a material, which is permeable for the radiation emitted by the transmitter component (5).

## Revendications

1. Rétroviseur extérieur comprenant une tête de rétroviseur (1) munie d'un boîtier (3) dans lequel un support (2) pour le boîtier (3) est installé, comportant une ouverture (7) pouvant être fermée par au moins un cache (4), munie d'au moins une partie émettrice (5) d'une commande d'ouverture de porte de garage, **caractérisé en ce que** le cache (4) est maintenu au support (2).

2. Rétroviseur extérieur selon la revendication 1, **caractérisé en ce que** le cache (4) est relié de manière détachable au support (2).

3. Rétroviseur extérieur selon la revendication 2, **caractérisé en ce que** le cache (4) est relié au support (2) par encliquetage.

4. Rétroviseur extérieur selon la revendication 2, **caractérisé en ce que** le cache (4) est vissé au support (2).

5. Rétroviseur extérieur selon la revendication 4, **caractérisé en ce que** le cache (4) comprend au moins une, de préférence deux, dans le sens de la longueur du cache (4), pièces de maintien (25, 26) prévues distantes l'une de l'autre pour respectivement un élément de fixation.

6. Rétroviseur extérieur selon l'une des revendications 1 à 5, **caractérisé en ce que** le cache (4) comprend au moins une, de préférence deux pièces de maintien (14, 15) supplémentaires juxtaposées à distance pour fixer la partie émettrice (5) de la commande d'ouverture de porte de garage.

7. Rétroviseur extérieur selon la revendication 6, **caractérisé en ce que** la pièce de maintien (14) supplémentaire est une vis pouvant être vissée dans une pièce réceptrice (19) à la face intérieure (27) du cache (4).

8. Rétroviseur extérieur selon la revendication 6 ou 7, **caractérisé en ce que** l'autre pièce de maintien (15) supplémentaire est de forme crochue et vient en prise de l'arrière par une extrémité crochue (15') avec un élément de raccord (16) de la partie de commande d'ouverture de porte de garage (5).

9. Rétroviseur extérieur selon la revendication 8, **caractérisé en ce que** l'autre pièce de maintien (15) supplémentaire dépasse de la face intérieure (27) du cache (4).

10. Rétroviseur extérieur selon la revendication 8 ou 9, **caractérisé en ce que** l'autre pièce de maintien (15) supplémentaire est conçue d'un seul tenant avec le cache (4).

11. Rétroviseur extérieur selon l'une des revendications 6 à 10, **caractérisé en ce que** les deux pièces de maintien (14, 15) supplémentaires sont prévues avec environ la même distance entre les pièces de maintien (25, 26) voisines du cache (4).

12. Rétroviseur extérieur selon l'une des revendications 5 à 11, **caractérisé en ce que** les pièces de maintien (25, 26) dépassent de la face intérieure (27) du cache (4).

13. Rétroviseur extérieur selon l'une des revendications 5 à 12, **caractérisé en ce que** les pièces de maintien (25, 26) sont conçues d'un seul tenant avec le cache (4)

14. Rétroviseur extérieur selon l'une des revendications 1 à 13, **caractérisé en ce que** la partie émettrice (5) de la commande d'ouverture de porte de garage repose entre les nervures de renfort (21, 22) transversalement au sens de la longueur du cache (4).

15. Rétroviseur extérieur selon l'une des revendications 1 à 14, **caractérisé en ce que** le cache (4) s'étend de la face inférieure (6) du boîtier (3) dans la paroi (29) du boîtier (3) faisant face au sens de marche (F) du véhicule.

16. Rétroviseur extérieur selon la revendication 14 ou 15, **caractérisé en ce que** les nervures de renfort (21, 22) sont placées dans la région de transition (20) entre les deux régions du cache (4).

17. Rétroviseur extérieur selon l'une des revendications 1 à 16, **caractérisé en ce que** la partie émettrice (5) comprend des éléments de raccord (16, 17), dépassant par des côtés (33, 34), ayant avantageusement des ouvertures (18, 19) pour respectivement les pièces de maintien (14, 15) supplémentaires.

18. Rétroviseur extérieur selon l'une des revendications 1 à 17, **caractérisé en ce que** le cache (4) est fixé au support (2) par les pièces de maintien (25,26).

19. Rétroviseur extérieur selon l'une des revendications 1 à 18, **caractérisé en ce que** le cache (4) avec sa face externe constitue une continuité des zones adjacentes du boîtier (3).

20. Rétroviseur extérieur selon l'une des revendications 1 à 19, **caractérisé en ce que** le cache (4) est composé d'un matériau perméable au rayonnement émis par la partie émettrice (5).
